# EUROPÄISCHE PATENTSCHRIFT

(11) **EP 0 717 175 B1**
(45) Veröffentlichungstag und Bekanntmachung des Hinweises auf die Patenterteilung: **09.09.1998**
(21) Anmeldenummer: 95117761.7
(22) Anmeldetag: 11.11.1995
(51) Int. Cl.: F01M 1/12, F01M 5/00, F01M 5/02

(54) **Anordnung zum Fördern und Kühlen des Schmieröls von Verbrennungsmotoren**
Arrangement for delivering and cooling of the lubricant of internal combustion engines
Agencement pour le refoulement et le refroidissement du lubrifiant des moteurs à combustion interne

(30) Priorität: 13.12.1994 DE 4444276
(43) Veröffentlichungstag der Anmeldung: 19.06.1996
(73) Patentinhaber: JENBACHER ENERGIESYSTEME AKTIENGESELLSCHAFT, A-6200 Jenbach (AT)
(72) Erfinder: Petrik, Gerhard, 6200 Jenbach (AT); Schüber, Ernst, 6130 Schwaz (AT); Gruber, Friedrich, 6283 Hippach 172 (AT); Plohberger, Diethard, 6200 Jenbach (AT)
(74) Vertreter: Patentanwälte Dr. Solf & Zapf

(56) Entgegenhaltungen:
- DE-A- 3 620 903
- DE-C- 648 930
- GB-A- 237 559
- GB-A- 589 256
- PATENT ABSTRACTS OF JAPAN vol. 007 no. 269 (M-259) ,30.November 1983 & JP-A-58 148212 (HONDA GIKEN KOGYO KK) 3.September 1983,
- PATENT ABSTRACTS OF JAPAN vol. 013 no. 036 (M-790) ,26.Januar 1989 & JP-A-63 246405 (HONDA MOTOR CO LTD) 13.Oktober 1988,
- PATENT ABSTRACTS OF JAPAN vol. 016 no. 149 (M-1234) ,13.April 1992 & JP-A-04 005461 (YANMAR DIESEL ENGINE CO LTD) 9.Januar 1992,
- PATENT ABSTRACTS OF JAPAN vol. 008 no. 143 (M-306) ,4.Juli 1984 & JP-A-59 041616 (TOYOTA JIDOSHA KK;OTHERS: 01) 7.März 1984,
- PATENT ABSTRACTS OF JAPAN vol. 012 no. 475 (M-774) ,13.Dezember 1988 & JP-A-63 195309 (HONDA MOTOR CO LTD) 12.August 1988,
- PATENT ABSTRACTS OF JAPAN vol. 011 no. 339 (M-639) ,6.November 1987 & JP-A-62 121822 (HONDA MOTOR CO LTD) 3.Juni 1987,

## Beschreibung

Die vorliegende Erfindung betrifft eine Anordnung zum Fördern und Kühlen des Schmieröls von Verbrennungsmotoren, insbesondere gasbetriebenen Verbrennungsmotoren zum Einsatz in Blockheizkraftwerken, mit einem Schmierölkreis, der eine, insbesondere vom Verbrennungsmotor angetriebene, Schmierölpumpe und eine am Motorblock des Verbrennungsmotors angeordnete Ölauffangwanne aufweist, aus der das Schmieröl über die Schmierölpumpe abgezogen und in den Motorblock gefördert wird, und mit einem vom Schmierölkreis getrennten Kühlkreis zur Kühlung des Schmieröls mittels eines im Kühlkreis angeordneten Ölkühlers, wobei im Kühlkreis das Schmieröl mittels einer unabhängig vom Verbrennungsmotor angetriebenen Kühlkreis-Pumpe aus der Auffangwanne über den Ölkühler in die Auffangwanne zurückgefördert wird.

Üblicherweise ist bei gasbetriebenen Verbrennungsmotoren von Blockheizkraftwerken ein zum Kühlen des Motorschmieröls erforderlicher Ölkühler im Schmiermittelkreis des Verbrennungsmotors angeordnet. Ein derartiger Schmiermittelkreis beginnt in einer Ölauffangwanne unterhalb des Motorblocks, und weist eine vom Verbrennungsmotor unmittelbar angetriebene Schmierölpumpe auf sowie einen hinter dieser in Fließrichtung des Schmieröls angeordneten Ölkühler und einen diesem folgenden Ölfilter, von dem aus das Schmieröl in den Motorblock eingeleitet wird, so daß der Verbrennungsmotor an seinen Schmierstellen die notwendige Schmierung erhält, bzw. die Reibungswärme abgeführt werden kann. Um die Öltemperaturen im für die notwendige Viskosität erforderlichen Bereich zu halten, muß das Öl mittels eines Ölkühlers gekühlt werden. Hohe Öltemperaturen lassen das Öl schneller altern. Diese Alterung des Schmieröls steigt exponentiell mit der Öltemperatur an. Um die Zeitspanne der Alterung zu verlängern, wird üblicherweise das Volumen des Schmierölbehälters derart vergrößert, daß beispielsweise eine Service-Zeit von ca. 1.000 Stunden eingehalten werden kann. Das große Ölvolumen erhöht aber die Betriebskosten erheblich.

Weitere Nachteile eines solchen Schmierölkreises bei der Verwendung in Blockheizkraftwerken sind:
a) Das Rohrwerk von der Schmierölpumpe zum Ölkühler und zum Motorblock wird voluminös, wodurch die Vorschmierzeit verlängert wird, und es besteht die Gefahr der Bildung von Luftsäcken in den Leitungen, die nur durch gezielte Entlüftungen entfernt werden können. Derartige Entlüftungen müssen dauerhaft wirken und sind somit als Ölverbraucher einzustufen, wodurch die Ölpumpe überdimensioniert werden muß.
b) Die Temperaturspreizung des Schmieröls ist bei konstanter Wärmetauscherfläche des Ölkühlers vom Förderstrom der Schmierölpumpe direkt abhängig.
c) Der Ölkühler muß für den Kaltstart des Motors auf hohe Drücke (minimal 15 bar) dimensioniert werden.
d) Im Falle einer gezielten Schnellvorwärmung des Motors über das Schmieröl muß eine Vorschmierpumpe sehr groß (leistungsstark) dimensioniert werden, da auch die Widerstände des Schmiersystems überwunden werden müssen.
e) Durch die Strömungswiderstände des Rohrwerks bzw. des Ölkühlers wird die Förderleistung der Schmierölpumpe reduziert.

Ein Teil dieser Nachteile läßt sich dadurch überwinden, daß die Funktionen des Schmierens und des Kühlens aufgeteilt und auf zwei getrennte Ölkreise übertragen. Hierdurch muß bei einer Dimensionierung des Ölkühlers nicht mehr berücksichtigt werden, daß bei kaltem Schmieröl der Öldruck im Schmierölkreislauf sehr hoch ist und der Ölkühler diesem hohen Druck standhalten muß. Da der Kühlkreis das in der Auffangwanne befindliche Schmieröl unmittelbar umwälzt, kann die Kühlung unabhängig vom Motorbetrieb erfolgen, so daß die Pumpenleistung der Kühlkreis-Pumpe in Abhängigkeit von der Öltemperatur gesteuert werden kann.

So beschreibt die DE-A-36 20 903 eine bekannte gattungsgemäße Anordnung zum Fördern und Kühlen des Schmieröls von Verbrennungsmotoren mit einem Schmierölkreis und mit einem vom Schmierölkreis getrennten Kühlkreis zur Kühlung des Schmieröls mittels eines im Kühlkreis angeordneten Ölkühlers. In dem Kühlkreis wird das Schmieröl mittels einer unabhängig vom Verbrennungsmotor angetriebenen Kühlkreis-Pumpe aus der Auffangwanne in einen Ölkühler gefördert. Der Ölkühler befindet sich am höchsten Punkt des Kühlölkreislaufs, von wo das Öl drucklos in die Auffangwanne zurückläuft. Der Schmierölkreis besteht aus einer am Motorblock des Verbrennungsmotors angeordneten Ölauffangwanne. Das Vorhandensein einer in der Beschreibung und den Zeichnungen der DE-A-36 20 903 nicht explizit genannten Schmierölpumpe, mit der das Schmieröl abgezogen und in den Motorblock gefördert wird, ist einem Bezug in dieser Schrift auf die DE-C-6 48 930 zu entnehmen und ergibt sich aus der Tatsache, daß der Schmierölkreislauf als Hochdruckkreislauf ausgelegt ist. Dadurch, daß bei dieser Anordnung der Kühlkreis leicht leerlaufen kann, verlängert sich jedoch die Vorschmierzeit und es besteht die Gefahr der Bildung von Luftsäcken in den Leitungen, die nur durch gezielte Entlüftungen entfernt werden können. Wie vorstehend unter a) bei der allgemeinen Zusammenstellung der Nachteile bekannter Anordnungen ausgeführt, sind derartige Entlüftungen als Ölverbraucher einzustufen, wodurch die Kühlkreis-Pumpe überdimensioniert werden muß. Zudem wird bereits durch die Strömungswiderstände des Rohrwerks bzw. des Ölkühlers die Förderleistung der Schmierölpumpe reduziert (siehe e)). Insbesondere muß, wie oben unter d) beschrieben, im Falle einer angestrebten Schnellvorwärmung des Motors über den für Hochdruck ausgelegten Schmierölkreis eine Vorschmierpumpe vorgesehen werden. Aus den genannten Gründen erscheint eine solche Anordnung, insbesondere für die in Blockheizkraftwerken zur Anwendung kommenden Gas-Verbrennungsmotoren völlig ungeeignet oder zumindest sehr unvorteilhaft.

Eine ähnliche Anordnung mit einem Kühlkreis zur Kühlung des Schmieröls eines Motors mittels eines im Kühlkreis angeordneten Ölkühlers und mit einer unabhängig vom Verbrennungsmotor angetriebenen Kühlkreis-Pumpe beschreibt auch die JP-A-59 041616. Diese Anordnung weist aber keinen Schmierölkreis mit einer, insbesondere vom Verbrennungsmotor angetriebenen Schmierölpumpe und keine am Motorblock des Verbrennungsmotors angeordnete Ölauffangwanne auf, aus der das Schmieröl über die Schmierölpumpe abgezogen und in den Motorblock gefördert wird.

In den Schriften GB-A-589 256, GB-A-237 559 und JP-A-58 148212 werden ebenfalls Anordnungen zum Fördern und Kühlen des Schmieröls von Verbrennungsmotoren mit einem Schmierölkreis und einem von diesem getrennten Kühlölkreis beschrieben. Im Schmierölkreis befindet sich eine Schmierölpumpe und eine am Motorblock des Verbrennungsmotors angeordnete Ölauffangwanne, aus der das Schmieröl über die Schmierölpumpe abgezogen und in den Motorblock gefördert wird. Die Schmierölpumpe ist vom Verbrennungsmotor angetrieben. In dem vom Schmierölkreis getrennten Kühlkreis sind zur Kühlung des Schmieröls ein Ölkühler und eine Kühlkreis-Pumpe angeordnet, die ebenfalls vom Verbrennungsmotor angetrieben ist und daher nur gleichzeitig mit dem Motor betrieben werden kann. Der Ansaugbereich des Schmierölkreises in der Auffangwanne liegt räumlich entfernt vom Ansaugbereich des Kühlkreises, jedoch in der Nähe dessen Einlaufbereiches und ist gemeinsam mit dem letzteren durch eine Wand vom übrigen Bereich der Auffangwanne abgeteilt.

Der vorliegenden Erfindung liegt das Problem zugrunde, die vorstehend genannten Nachteile zu vermeiden und eine gattungsgemäße Anordnung zum Fördern und Kühlen des Schmieröls von Verbrennungsmotoren zu schaffen, mit der bei geringem Ölvolumen sowie einer kostengünstigen und kompakten Ausführung ein sicherer und energieökonomischer Betrieb und insbesondere ein schneller und energetisch günstiger Anfahrvorgang möglich ist.

Gemäß der Erfindung wird dieses Problem dadurch gelöst, daß in Strömungsrichtung des Schmieröls hinter der Kühlkreis-Pumpe zwischen der Kühlkreis-Pumpe und dem Motor zur Förderung des Schmieröls in den Motorblock eine Bypaßleitung die Schmierölpumpe überbrückend verläuft, wobei die Bypaaßleitung über eine Ventilanordnung zu öffnen und zu verschließen ist, und zwar unter gleichzeitigem Verschließen und Öffnen der Leitung des Kühlkreises.

Bei einer solchen erfindungsgemäßen Anordnung entfällt vorteilhafterweise die Notwendigkeit einer Vorschmier-Ölpumpe, da deren Funktion durch die Kühlkreis-Pumpe übernommen werden kann, wodurch der angestrebte schnelle und energetisch günstige Anfahrvorgang erreicht werden kann. Es besteht die Möglichkeit, eine vom Motorbetrieb unabhängige Vorwärmung des Schmieröls vorzunehmen oder aber auch eine Nachkühlung nach Abschalten des Motors.

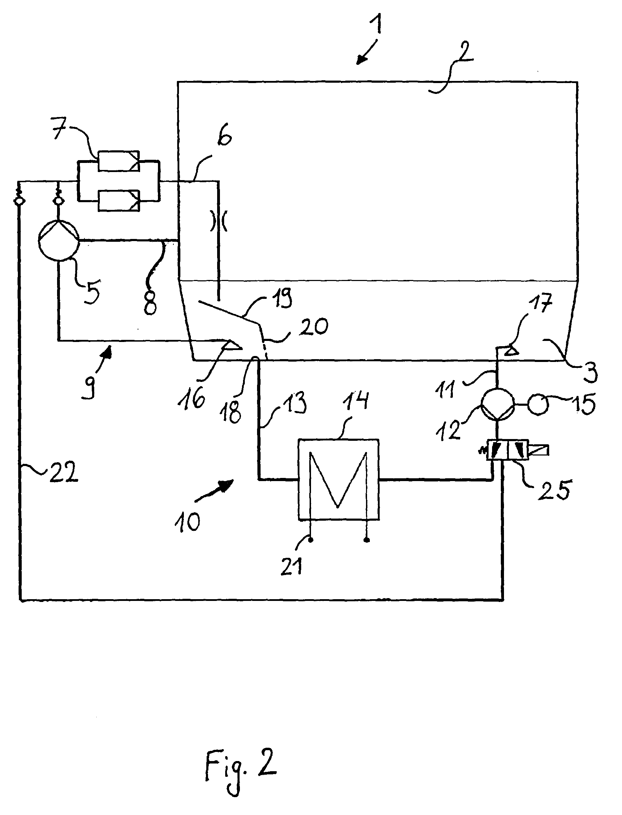

Weitere zweckmäßige Ausführungen der Erfindung sind in den Unteransprüchen enthalten. Anhand eines in Fig. 2 dargestellten Ausführungsbeispiele wird die Erfindung näher erläutert. Es zeigen:
- Fig. 1: eine Prinzipdarstellung einer nicht erfindungsgemäßen Anordnung eines Schmier- und Kühlkreises eines Verbrennungsmotors,
- Fig. 2: eine Prinzipdarstellung einer erfindungsgemäßen Anordnung eines Schmier- und Kühlkreises eines Verbrennungsmotors.

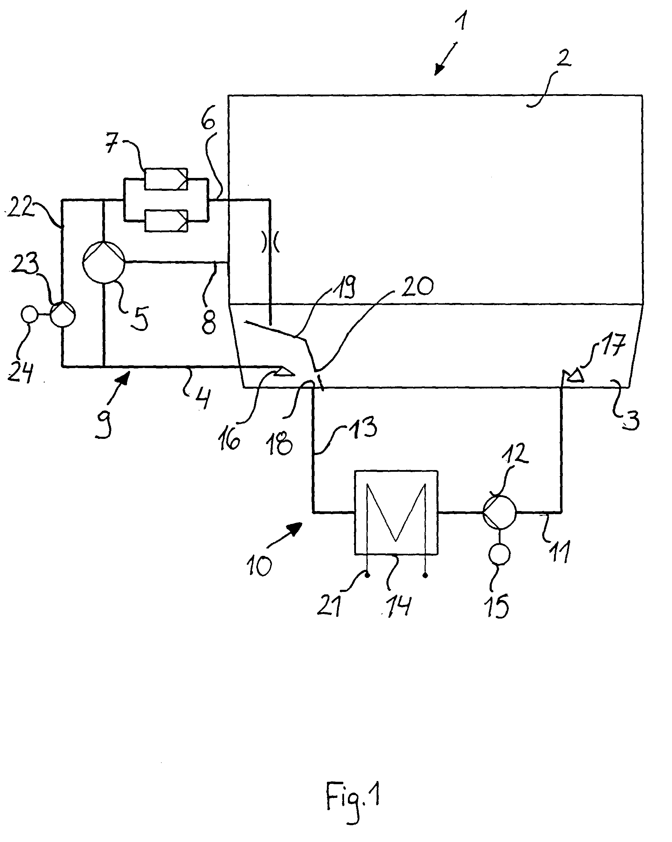

Wie in Fig. 1 dargestellt ist, weist ein Verbrennungsmotor 1, insbesondere ein Gas-Verbrennungsmotor, vorzugsweise ein Hubkolbenmotor, wie er in Blockheizkraftwerken eingesetzt wird, einen Motorblock 2 auf, der eine untere Ölauffangwanne 3 besitzt. In der Ölauffangwanne 3 ist das zur Motorschmierung befindliche Schmieröl enthalten bzw. wird nach einem Durchlaufen durch den Motorblock 2 mit seinen verschiedenen Schmierstellen in der Ölauffangwanne 3 aufgefangen. Das in der Ölauffangwanne 3 befindliche Schmieröl wird aus dieser über eine Leitung 4 mittels einer Schmierölpumpe 5 angesaugt und von der Schmierölpumpe 5 über eine Leitung 6 in den Motorblock 2 gefördert. Zwischen der Schmierölpumpe 5 und dem Motorblock 2 ist in der Leitung 4 zweckmäßigerweise ein Ölfilter 7 eingeschaltet, in dem eine Reinigung des Schmieröls durchgeführt wird. Die Schmierölpumpe 5 wird direkt vom Verbrennungsmotor 1 angetrieben, was durch die Verbindungslinie 8 verdeutlicht ist. Die vorbeschriebene Anordnung bildet einen Schmierölkreis 9. Weiterhin ist zu erkennen, daß zusätzlich ein Kühlkreis 10 vorhanden ist, in dem über eine Leitung 11 aus der Auffangwanne 3 das in dieser befindliche Schmieröl mittels einer Kühlkreis-Pumpe 12 angesaugt und über eine Leitung 13 von dieser in die Auffangwanne 3 nach vorherigem Durchlaufen durch einen Ölkühler 14 zurückgefördert wird. Somit wird ein vom Schmierölkreis 9 unabhängiger Kühlkreis 10 geschaffen, dessen Kühlkreis-Pumpe 12 unabhängig vom Verbrennungsmotor 1 angetrieben wird, und zwar zweckmäßigerweise mit einem Elektromotor 15. Es ist vorteilhaft, wenn der Ansaugbereich 16 der Leitung 4 des Schmierölkreises 9 in der Auffangwanne 3 räumlich entfernt vom Ansaugbereich 17 der Leitung 11 des Kühlkreises 10 ist. Weiterhin ist es vorteilhaft, wenn der Einlaufbereich 18 des Kühlkreises 10 über die Leitung 13 in der räumlichen Nähe zum Ansaugbereich 16 des Schmierölkreises 9 innerhalb der Auffangwanne 3 angeordnet ist. Weiterhin ist es von Vorteil, wenn der Ansaugbereich 16 und der Einlaufbereich 18 durch eine Leitblechanordnung 19 vom übrigen Bereich der Auffangwanne 3 abgeteilt ist. Die Leitblechanordnung 19 bewirkt eine Ableitung des aus dem Motorblock 2 einlaufenden Schmieröls vom Ansaugbereich 16 des Schmierölkreises 9 weg hin in Richtung auf den Ansaugbereich 17 des Kühlkreises 10, so daß das im Ansaugbereich 16 des Schmierölkreises 9 eintretende gekühlte Schmieröl sich möglichst wenig mit dem auf hoher Temperatur befindlichen aus dem Motorblock 2 austretenden Schmieröl mischt. Um eine Zirkulation des Schmieröls in der Auffangwanne 3 in bezug auf den Kühlkreislauf zu gewährleisten, ist die Leitblechanordnung 19 mit Durchbrechungen 20 versehen. Da die Kühlkreis-Pumpe 12 unabhängig vom Verbrennungsmotor 1 angetrieben wird, kann die Pumpenleistung in Abhängigkeit von der Öltemperatur des Schmieröls geregelt werden. Der Ölkühler 14 wird mit einem üblichen Kühlmittel betrieben, wobei die Eintrittstemperatur an seinem Eingang 21 zweckmäßigerweise oberhalb der Umgebungstemperatur und unterhalb der Austrittstemperatur des Schmieröls aus dem Motorblock 2 liegt. Bei Blockheizkraftwerken mit Gasverbrennungsmotoren liegt beispielsweise die Eintrittstemperatur des Kühlmittels bei ca. 70 °C. Somit kann mit einem derart betriebenen Ölkühler 14 bei Bedarf auch eine Vorwärmung des Schmieröls in der Ölauffangwanne 3 erfolgen. Die verwendete Kühlkreis-Pumpe 12 kann eine geringe Leistung besitzen, da nur ein geringes Δp innerhalb des Kühlkreises 10 vorhanden ist. Da nur ein relativ niedriger Öldruck im Kühlkreis 10 erforderlich ist, kann der Ölkühler 14 entsprechend dimensioniert werden. Da die Kühlung des Schmiermittels unabhängig von dem Motorbetrieb des Verbrennungsmotors 1 ist, kann die Kühlleistung wesentlich erhöht werden, so daß das Ölvolumen relativ klein gehalten werden kann.

Weiterhin ist in Fig. 1 zu erkennen, daß im Schmierölkreis 9 parallel zur Schmierölpumpe 5 in einer Bypassleitung 22 eine Vorschmier-Ölpumpe 23 angeordnet ist, die über einen Elektromotor 24 angetrieben wird. Diese Vorschmier-Ölpumpe 23 dient dazu, den Verbrennungsmotor 1 vorzuschmieren, wenn dieser noch nicht in Betrieb ist.

In Fig. 2 ist eine erfindungsgemäße alternative Ausführungsform zu der Anordnung gemäß Fig. 1 dargestellt, wobei gleiche Teile wie in Fig. 1 mit denselben Bezugsziffern gekennzeichnet sind. Bei der in Fig. 2 dargestellten Ausführung fällt die Vorschmier-Ölpumpe 23 gemäß Fig. 1 weg und deren Funktion wird durch die Kühlkreis-Pumpe 12 übernommen. Hierzu befindet sich in der Leitung 13 in Strömungsrichtung hinter der Kühlkreis-Pumpe 12 eine Ventilanordnung 25, insbesondere ein 3/2-Wege-Ventil, an dessen weiteren Ausgang die Bypassleitung 22 angeschlossen ist. Im Startfall des Verbrennungsmotors 1 wird über das 3/2-Wege-Ventil zunächst die Bypassleitung 22 geöffnet und die Leitung 13 geschlossen, da zu diesem Zeitpunkt noch keine Ölkühlung erforderlich ist. Nach der Startfreigabe wird die Bypassleitung 22 geschlossen und die Leitung 13 geöffnet, und somit der Kühlkreis 10 zugeschaltet durch Umschalten der Ventilanordnung 25. Aus Sicherheitsgründen ist das 3/2-Wege-Ventil so ausgeführt, daß es stromlos in Richtung Kühlkreis 10 geschaltet ist.

Eine weitere erfindungsgemäße Ausgestaltung kann darin bestehen, daß der Ölkühler 14 zwei- oder mehrstufig ausgebildet wird, d.h. in zwei oder mehrere hintereinandergeschaltete Ölkühler unterteilt wird. Hierbei können die einzelnen Ölkühler mit auf unterschiedlichem Temperaturniveau befindlichen Kühlmittel gekühlt werden. Durch diese Splittung kann die Energiebilanz in Richtung auf hohe Temperaturen verschoben werden, so daß die Energiebilanz verbessert wird. Eine weitere erfindungsgemäße Alternative kann zum gleichen Zweck darin bestehen, im Schmierölkreis 9, insbesondere hinter der Schmierölpumpe 5, einen Zusatz-ölkühler zur Öltemperaturabsenkung anzuordnen, mit dem die Öltemperatur gesenkt wird.

## Patentansprüche

1. Anordnung zum Fördern und Kühlen des Schmieröls von Verbrennungsmotoren, insbesondere Gas-Verbrennungsmotoren in Blockheizkraftwerken, mit einem Schmierölkreis (9), der eine, insbesondere vom Verbrennungsmotor (1) angetriebene, Schmierölpumpe (5) und eine am Motorblock (2) des Verbrennungsmotors (1) angeordnete Ölauffangwanne (3) aufweist, aus der das Schmieröl über die Schmierölpumpe (5) abgezogen und in den Motorblock (2) gefördert wird, und mit einem vom Schmierölkreis getrennten Kühlkreis (10) zur Kühlung des Schmieröls mittels eines im Kühlkreis (10) angeordneten Ölkühlers (14), wobei im Kühlkreis (10) das Schmieröl mittels einer unabhängig vom Verbrennungsmotor (1) angetriebenen Kühlkreis-Pumpe (12) aus der Auffangwanne (3) über den Ölkühler (14) in die Auffangwanne (3) zurückgefördert wird,
**dadurch gekennzeichnet**, daß in Strömungsrichtung des Schmieröls hinter der Kühlkreis-Pumpe (12) zwischen der Kühlkreis-Pumpe (12) und dem Motor (1) zur Förderung des Schmieröls in den Motorblock (2) eine Bypaßleitung (22) die Schmierölpumpe (5) überbrückend verläuft, wobei die Bypaßleitung (22) über eine Ventilanordnung (25) zu öffnen und zu verschließen ist, und zwar unter gleichzeitigem Verschließen und Öffnen der Leitung (13) des Kühlkreises (10).

2. Anordnung nach Anspruch 1,
**dadurch gekennzeichnet**, daß die Ventilanordnung (25) ein 3/2-Wege-Ventil ist.

3. Anordnung nach Anspruch 2,
**dadurch gekennzeichnet**, daß das 3/2-Wege-Ventil stromlos in Richtung der Leitung (13) des Kühlkreises (10) geschaltet ist.

4. Anordnung nach einem der Ansprüche 1 bis 3,
**dadurch gekennzeichnet**, daß die Kühlkreis-Pumpe (12) in Abhängigkeit von der Temperatur des Schmieröls in bezug auf ihre Förderleistung steuer- bzw. regelbar ist.

5. Anordnung nach einem der Ansprüche 1 bis 4,
**dadurch gekennzeichnet**, daß der Ansaugbereich (16) des Schmierölkreises (9) im Auffangbehälter (3) räumlich entfernt vom Ansaugbereich (17) des Kühlkreises (10) ist.

6. Anordnung nach einem der Ansprüche 1 bis 5,
**dadurch gekennzeichnet**, daß der Ansaugbereich (16) des Schmierölkreises (9) und der Einlaufbereich (18) des Kühlkreises (10) in der Auffangwanne (3) nahe beieinander angeordnet sind.

7. Anordnung nach einem der Ansprüche 1 bis 6,
**dadurch gekennzeichnet**, daß der Ansaugbereich (16) des Schmierölkreises (9) und der Einlaufbereich (18) des Kühlkreises (10) durch eine Leitblechanordnung (19) vom übrigen Bereich der Auffangwanne (3) abgeteilt sind.

8. Anordnung nach einem der Ansprüche 1 bis 7,
**dadurch gekennzeichnet**, daß zwischen der Schmierölpumpe (5) und dem Motorblock (2) in der Leitung (6) ein Ölfilter (7) angeordnet ist.

9. Anordnung nach einem der Ansprüche 1 bis 8,
**dadurch gekennzeichnet**, daß der Ölkühler (14) zwei- oder mehrstufig ausgeführt ist.

10. Anordnung nach einem der Ansprüche 1 bis 11,
**dadurch gekennzeichnet**, daß im Schmierölkreis (9), insbesondere nach der Schmierölpumpe (5) ein Zusatz-Ölkühler angeordnet ist.

## Claims

1. Arrangement for conveying and cooling the lubricating oil of combustion engines, in particular gas combustion engines in block-type thermal power stations, having a lubricating-oil circuit (9) which has a lubricating-oil pump (5) driven, in particular, by the combustion engine (1), and an oil sump pan (3) which is arranged on the engine block (2) of the combustion engine (1) and from which the lubricating oil is drawn off, via the lubricating-oil pump (5), and is conveyed into the engine block (2), and having a cooling circuit (10); which is separated from the lubricating-oil circuit, for cooling the lubricating oil by means of an oil cooler (14) arranged in the cooling circuit (10), the lubricating oil in the cooling circuit (10) being conveyed out of the sump pan (3) via the oil cooler (14) back into the sump pan (3) by means of a cooling-circuit pump (12), which is driven independently or the combustion engine (1), characterized in that behind the cooling-circuit pump (12), in the direction of flow of the lubricating oil, a bypass line (22), which bypasses the lubricating-oil pump (5), extends between the cooling-circuit pump (12) and the engine (1) and is intended for conveying the lubricating oil into the engine block (2), the bypass line (22) being opened and closed via a valve arrangement (25), to be precise while the line (13) of the cooling circuit (10) simultaneously closes and opens.

2. Arrangement according to Claim 1, characterized in that the valve arrangement (25) is a 3/2-directional control valve.

3. Arrangement according to Claim 2, characterized in that the 3/2-directional control valve is currentlessly switched in the direction of the line (13) of the cooling circuit (10).

4. Arrangement according to one of Claims 1 to 3, characterized in that the cooling-circuit pump (12) can be controlled or regulated with regard to its volumetric capacity as a function of the temperature of the lubricating oil.

5. Arrangement according to one of Claims 1 to 4, characterized in that the draw-off region (16) of the lubricating-oil circuit (9) in the sump container (3) is spatially removed from the draw-off region (17) of the cooling circuit (10).

6. Arrangement according to one of Claims 1 to 5, characterized in that the draw-off region (16) of the lubricating-oil circuit (9) and the inlet region (18) of the cooling circuit (10) in the sump pan (3) are arranged close to one another.

7. Arrangement according to one of Claims 1 to 6, characterized in that the draw-off region (16) of the lubricating-oil circuit (9) and the intake region (18) of the cooling circuit (10) are divided off from the remaining region of the sump pan (3) by means of a baffle-plate arrangement (19).

8. Arrangement according to one of Claims 1 to 7, characterized in that an oil filter (7) is arranged in the line (6) between the lubricating-oil pump (5) and the engine block (2).

9. Arrangement according to one of Claims 1 to 8, characterized in that the oil cooler (14) is designed in two or more stages.

10. Arrangement according to one of Claims 1 to 9, characterized in that an additional oil cooler is arranged in the lubricating-oil circuit (9), in particular downstream of the lubricating-oil pump (5).

## Revendications

1. Agencement pour le refoulement et le refroidissement du lubrifiant de moteurs à combustion interne, en particulier de moteurs thermiques à gaz de centrales thermiques à unités génératrices autonomes, comportant un circuit de lubrifiant (9) qui comprend une pompe à lubrifiant (5) actionnée en particulier par le moteur à combustion interne (1), et un bac collecteur (3) de lubrifiant disposé sur le bloc moteur (2) du moteur à combustion interne (1), le lubrifiant étant prélevé de ce bac par la pompe (5), et refoulé vers le bloc moteur (2), l'agencement comportant également un circuit de refroidissement (10) séparé du circuit de lubrification, pour le refroidissement du lubrifiant au moyen d'un dispositif de refroidissement du lubrifiant (14) agencé dans le circuit de refroidissement (10), le lubrifiant étant ramené dans le circuit de refroidissement (10) vers le bac collecteur (3), au moyen d'une pompe de circuit de refroidissement (12) actionnée indépendamment du moteur à combustion interne (1),
caractérisé en ce que, dans la direction de circulation du lubrifiant, une conduite de dérivation (22) qui passe par-dessus la pompe de lubrifiant (5) s'étend derrière la pompe (12) du circuit de refroidissement, entre celle-ci et le moteur (1) pour refouler le lubrifiant vers le bloc moteur (2), la conduite de dérivation (22) pouvant être fermée et ouverte à l'aide d'un agencement à vannes (25), en fermant et en ouvrant simultanément la conduite (13) du circuit de refroidissement (10).

2. Agencement selon la revendication 1,
caractérisé en ce que l'agencement (25) est une vanne 3/2.

3. Agencement selon la revendication 2,
caractérisé en ce que la vanne 3/2 est montée pour qu'aucun courant ne circule dans la direction de la conduite (13) du circuit de refroidissement (10).

4. Agencement selon l'une des revendications 1 à 3,
caractérisé en ce que la capacité de refoulement de la pompe (12) du circuit de refroidissement peut être réglée ou ajustée en fonction de la température du lubrifiant.

5. Agencement selon l'une des revendications 1 à 4,
caractérisé en ce que la zone d'aspiration (16) du circuit de lubrifiant (9) dans le bac collecteur (3) est espacée de la zone d'aspiration (17) du circuit de refroidissement (10).

6. Agencement selon l'une des revendications 1 à 5,
caractérisé en ce que la zone d'aspiration (16) du circuit de lubrifiant (9) et la zone d'entrée (18) du circuit de refroidissement (10) dans le bac collecteur (3) sont voisines dans l'espace.

7. Agencement selon l'une des revendications 1 à 6,
caractérisé en ce que la zone d'aspiration (16) du circuit de lubrifiant (9) et la zone d'entrée (18) du circuit de refroidissement (10) sont séparées du reste du bac collecteur (3) par un agencement à tôle de guidage (19).

8. Agencement selon l'une des revendications 1 à 7,
caractérisé en ce qu'un filtre à huile (7) est disposé dans la conduite (6) entre la pompe à lubrifiant (5) et le bloc moteur (2).

9. Agencement selon l'une des revendications 1 à 8,
caractérisé en ce que le dispositif de refroidissement de l'huile (14) est réalisé en deux étages ou davantage.

10. Agencement selon l'une des revendications 1 à 9,
caractérisé en ce qu'un dispositif de refroidissement de l'huile supplémentaire est disposé dans le circuit de lubrifiant (9), en particulier en aval de la pompe de lubrifiant (5).
